# FASCICULE DE BREVET EUROPEEN

(11) **EP 3 123 009 B1**
(45) Date de publication et mention de la délivrance du brevet: **14.11.2018**
(21) Numéro de dépôt: 15725705.6
(22) Date de dépôt: 26.03.2015
(51) Int. Cl.: F02C 3/10, F02C 7/275, F02C 7/36, F02C 9/42

(54) **DISPOSITIF D'ASSISTANCE POUR UNE TURBOMACHINE À TURBINE LIBRE D'AÉRONEF**
HILFSVORRICHTUNG FÜR EIN FLUGZEUG MIT FREIER TURBINENTURBOMASCHINE
ASSISTANCE DEVICE FOR AN AIRCRAFT FREE TURBINE TURBOMACHINE

(30) Priorité: 27.03.2014 FR 1400752
(43) Date de publication de la demande: 01.02.2017
(73) Titulaire: Safran Helicopter Engines, 64510 Bordes (FR)
(72) Inventeur: POUMAREDE, Vincent, F-65000 Tarbes (FR); BAZET, Jean-Michel, F-64110 Gelos (FR); KLONOWSKI, Thomas, F-64160 Sedzere (FR)
(74) Mandataire: Healy, Erwan
(86) Numéro de dépôt international: PCT/FR2015/050766
(87) Numéro de publication internationale: WO 2015/145076

(56) Documents cités:
- EP-A2- 2 581 586
- WO-A2-2011/086019
- FR-A1- 2 967 133

## Description

### Contexte technique

L'invention s'inscrit dans le domaine des turbomachines à turbine libre pour aéronef comportant plusieurs turbomachines. L'aéronef peut notamment être un hélicoptère. Pour mémoire, une turbomachine à turbine libre comprend une turbine de puissance ou turbine libre qui, dans un hélicoptère, entraîne les rotors de celui-ci par l'intermédiaire d'une roue libre et d'une boîte de transmission principale (désignée dans la suite par BTP).

La turbomachine comprend par ailleurs un générateur de gaz comprenant notamment un compresseur, une chambre de combustion et une turbine haute pression (HP).

Un réducteur mécanique ou boîte d'accessoires permet de relier l'arbre du générateur de gaz à une machine électrique constituée d'un stator et d'un rotor, pouvant fonctionner indifféremment en moteur (démarreur) ou en génératrice.

Dans le mode moteur, cette machine électrique est alimentée par une source d'énergie électrique et développe un couple moteur de manière à entraîner en rotation le générateur de gaz de la turbomachine, notamment dans le but d'en assurer le démarrage, en effectuant ainsi une assistance au démarrage.

Dans le mode génératrice, la machine électrique est entraînée en rotation par le générateur de gaz de manière à prélever sur ce dernier une puissance mécanique qui est ensuite convertie en puissance électrique.

Il a été proposé dans le document US2013219905, pour un aéronef muni de deux turbomachines en situation de vol de croisière, de mettre une des deux turbomachines dans un régime de veille. Du fait de la roue libre, la turbine libre et la boîte de transmission sont désynchronisées. Parallèlement, le régime de l'autre turbomachine (ou des autres turbomachines) est augmenté, ce qui permet de maintenir des conditions de vol normales. La consommation en carburant globale du système est diminuée, car la consommation spécifique de la turbomachine maintenue en fonctionnement est alors plus faible.

Plusieurs variantes de ce régime de veille ont été proposées.

Dans une première variante, le générateur de gaz de la turbine à gaz désynchronisée peut être régulé, par apport de carburant, à un régime de ralenti faible. Cela peut être effectué avec ou sans l'application additionnelle d'un couple moteur d'assistance prolongée (assistance à la rotation à vitesse constante) sur le générateur de gaz par l'intermédiaire de la machine électrique et de la boîte d'accessoires.

Dans une deuxième variante, il est à l'inverse proposé d'éteindre totalement la chambre de combustion de la turbomachine tout en maintenant, à l'aide de la machine tournante, le générateur de gaz en rotation à une vitesse permettant de faciliter le rallumage à l'issu de la phase de vol de croisière. Il s'agit là aussi d'une assistance prolongée (assistance à la rotation à vitesse constante).

Ces modes de fonctionnement sont susceptibles d'être maintenus pendant toute la durée de vol de croisière.

Un redémarrage normal de la turbomachine désynchronisée est alors analogue en termes de performances exigées de la machine tournante actionnant le générateur de gaz, à la fonction usuelle de démarrage au sol. Un tel redémarrage normal demande généralement quelques dizaines de secondes entre le début du démarrage et le moment où le turbomoteur a atteint un régime suffisant pour générer de la puissance utile sur la turbine libre. Il est mis en oeuvre par exemple pour procéder à une manoeuvre prévue un certain temps à l'avance et dont l'exécution requiert le fonctionnement simultané des deux turbomachines, comme un atterrissage.

Ce redémarrage nécessite une accélération en rotation du générateur de gaz de la turbomachine. Une telle accélération est obtenue par augmentation du débit en carburant.

Mais il est parfois nécessaire d'être en mesure de réactiver la turbomachine désynchronisée rapidement, notamment en situation d'urgence, par exemple en cas de panne d'une autre turbomachine, s'il y a trois turbomachines ou plus au total, -ou de l'autre turbomachine si les turbomachines sont au nombre de deux. Le délai maximal autorisé, pour satisfaire les exigences de sécurité, entre la demande de démarrage d'urgence et le moment où le turbomoteur ainsi redémarré est en mesure de délivrer la puissance utile est typiquement de moins de 10 secondes.

Cette nécessité de pouvoir redémarrer rapidement la turbomachine éteinte est notamment la raison du maintien du générateur de gaz en rotation à une vitesse facilitant le rallumage dans les modes de fonctionnement dans lequel la chambre de combustion est éteinte.

Mais que le générateur de gaz soit dans une situation de faible régime ou de chambre de combustion éteinte, il est préférable, pour le redémarrage d'urgence notamment, d'appliquer sur l'arbre du générateur de gaz une puissance élevée en raison de l'inertie importante des ensembles tournants et du couple résistant du compresseur de la turbomachine. Cette puissance doit être délivrée pendant une durée brève, de l'ordre de quelques secondes. On estime que la puissance développée par le système de démarrage d'urgence doit, pendant ce court laps de temps, être de l'ordre de 5 à 10 fois élevée que celle nécessaire pour un démarrage normal.

Il a été suggéré dans US2013219905 d'utiliser, entre autres solutions, une énergie électrique, en particulier un supercondensateur, qui fournit une assistance ponctuelle à l'accélération en rotation au générateur de gaz. De manière générale, comme une puissance importante est nécessaire, il est avantageux de disposer d'un organe de stockage d'énergie électrique, capable de mobiliser une puissance importante pendant un court laps de temps. La puissance électrique est appliquée à travers une machine tournante démarreur.

Dans le document US2013086919, il a aussi été proposé d'utiliser deux supercondensateurs, qui sont chacun chargés respectivement par un générateur électrique entrainé par le générateur de gaz d'une des turbomachines, et qui servent chacun, ponctuellement, pour démarrer une autre turbomachine à partir d'un état éteint de celle-ci.

Dans le document US2010058731, une assistance ponctuelle à l'accélération est apportée au générateur de gaz d'un turbomoteur, notamment par apport de puissance mécanique sur le générateur de gaz par l'intermédiaire d'une machine électrique entraînée en rotation par la turbine libre.

Le document US2013219905 décrit lui aussi un dispositif d'assistance d'une turbomachine.

Ainsi, des solutions ont été proposées pour fournir la puissance élevée nécessaire au redémarrage d'urgence d'une turbomachine.

Mais dans ce contexte, au vu des enjeux en termes de sécurité, on comprend que les systèmes de démarrage d'urgence doivent garantir un haut niveau de disponibilité. En effet, en cas de perte de puissance sur le turbomoteur assurant à lui seul la propulsion de l'hélicoptère, l'impossibilité de redémarrer en urgence le turbomoteur initialement en mode de veille peut se traduire par la perte totale de puissance motrice.

Une telle exigence de haut niveau de disponibilité peut s'appliquer également à la fonction de démarrage normal d'une turbomachine en veille.

En effet lorsque le second turbomoteur fonctionne de manière nominale, l'impossibilité de redémarrer normalement la turbomachine initialement en mode de veille lors du retour en condition de vol bimoteur, notamment pour préparer l'atterrissage, se traduira par l'utilisation des régimes d'urgence OEI (pour *One Engine Inoperative,* ou un moteur non fonctionnant) sur le turbomoteur en fonctionnement.

Cette situation doit être évitée car elle augmente la charge de travail de l'équipage et l'utilisation des régimes d'urgence OEI est très dommageable pour le turbomoteur.

### Définition de l'invention et avantages associés

Pour résoudre ces problèmes, il est proposé un dispositif d'assistance pour une turbomachine à turbine libre d'aéronef tel que défini dans la première revendication.

On précise que, conformément à ce qui a été présenté plus haut, la première assistance est une assistance au mouvement en rotation, par entrainement mécanique du générateur de gaz par le rotor de la machine tournante démarreur, et la deuxième assistance est aussi une assistance au mouvement en rotation, par entrainement mécanique du générateur de gaz par un rotor de machine tournante démarreur, qui peut être la machine tournante démarreur déjà évoquée ou une autre machine tournante démarreur.

Grâce à ces caractéristiques, si le circuit comprenant le premier bobinage et l'alimentation de celui-ci subit une panne (ou plus généralement est insuffisant), ce qui engendre une perte totale ou partielle (ou une insuffisance) de la capacité d'assistance du générateur de gaz à l'aide du premier bobinage, alors il est possible d'y pallier à l'aide du deuxième bobinage et de son circuit d'alimentation.

La ou les machines tournantes démarreur peuvent être à courant alternatif ou à courant continu. Les bobinages peuvent être au rotor ou au stator, en fonction de la structure de la machine tournante utilisée.

L'alimentation du deuxième bobinage peut se faire à l'aide éléments également utilisés pour alimenter le premier bobinage, mais les circuits d'alimentation peuvent aussi être totalement distincts et ségrégués, ce qui est avantageux. Ce point est développé par la suite.

Pour détecter l'insuffisance de la première assistance, des moyens de surveillance sont utilisés, qui surveillent un ou plusieurs éléments de la chaîne de puissance alimentant la machine tournante démarreur en électricité, le système de supervision de la turbomachine, et/ou la turbomachine elle-même.

Selon un mode de réalisation avantageux, le dispositif d'assistance comprend la machine tournante démarreur et de plus une machine tournante démarreur tierce pour apporter une assistance à l'accélération du générateur de gaz d'une deuxième turbomachine de l'aéronef, le deuxième bobinage étant connecté électriquement en dérivation de ladite machine tournante tierce à une même voie d'alimentation électrique.

Cela permet de mutualiser les sources d'énergie et les moyens d'alimentation en énergie et donc de diminuer la masse des éléments nécessaires. Notamment, la source d'énergie en question peut être la source utilisée en priorité pour le redémarrage de la deuxième turbomachine, et qui est donc utilisée à titre de secours pour le redémarrage de la première turbomachine, si son circuit de redémarrage utilisant le premier bobinage fait défaut. La source peut être un élément de stockage d'énergie, utile notamment pour le redémarrage d'urgence.

Le dispositif d'assistance peut comprendre un convertisseur de puissance et est préférablement configuré pour qu'un convertisseur de puissance transmette de l'énergie électrique au deuxième bobinage de la machine tournante démarreur ou, de manière exclusive, à la machine tournante démarreur tierce. Cette configuration peut être faite à l'aide d'un couple de contacteurs compris dans le dispositif d'assistance et ne pouvant pas être en position fermée de manière simultanée, de manière à obtenir la transmission d'énergie électrique exclusive au deuxième bobinage ou à la machine tournante démarreur tierce.

Dans un mode de réalisation, ladite machine tournante démarreur, comprise dans le dispositif d'assistance, est une machine tournante à courant alternatif à tolérance de panne (« *fault tolérant»*) dite machine à double bobinage ou machine double étoile, le deuxième bobinage étant son deuxième bobinage.

De manière connue, ces machines tournantes à courant alternatif, de type synchrone ou asynchrone, sont caractérisées par deux jeux indépendants d'enroulements triphasés au stator, bobinés sur le même circuit magnétique, chaque bobinage étant alimenté par son propre convertisseur de puissance DC/AC. Bien que comportant de nombreuses variantes d'architecture, la conception de ces machines repose sur le principe général consistant à garantir un haut niveau d'isolation électrique et de ségrégation physique, thermique et magnétique entre chacun de ces deux bobinages. Cette séparation permet d'assurer qu'un défaut électrique tel que, par exemple, un court-circuit ou un circuit ouvert, survenant au niveau du premier bobinage ou de son convertisseur DC/AC d'alimentation, n'aura pas d'impact fonctionnel sur le second bobinage et donc sur la capacité du démarreur à délivrer un couple d'assistance au générateur de gaz. En mutualisant le circuit magnétique statorique ainsi que des éléments mécaniques tels que le rotor, les paliers et la structure (carter), une machine tournante de ce type est sensiblement plus compacte et plus légère qu'un ensemble de deux machines complètement indépendantes de performance totale équivalente, tout en offrant un niveau de tolérance élevé vis-à-vis des pannes électriques internes ou des pannes du convertisseur d'alimentation.

L'utilisation d'une machine à double bobinage permet de plus de ne mettre en place qu'une unique machine tournante, ce qui simplifie le montage sur la boîte d'accessoire de la turbomachine.

Dans un mode de réalisation, le premier bobinage est dimensionné pour permettre l'assistance à l'accélération avec des performances supérieures à celles fournies par le deuxième bobinage.

Ainsi, la machine tournante démarreur peut être dimensionnée pour permettre un démarrage d'urgence (démarrage rapide) de la turbomachine avec la seule alimentation électrique dudit premier bobinage, tout en gardant un dimensionnement raisonnable de l'ensemble, et en permettant toujours une redondance des capacités de démarrage en situation non urgente (démarrage normal).

Dans un mode de réalisation, le deuxième bobinage est dimensionné pour permettre l'assistance à l'accélération avec des performances similaires à celles fournies par le premier bobinage.

Ainsi on a une redondance complète des capacités de redémarrage, y compris, si les bobinages et le circuit magnétique sont dimensionnés pour cela, des capacités de redémarrage d'urgence.

Dans un mode de réalisation, le dispositif d'assistance comprend deux convertisseurs de puissance pour transmettre chacun de l'énergie électrique de manière contrôlée respectivement auxdits premier et deuxième bobinages.

Cela permet une transition fine entre les deux assistances en cas de détection de déficience dans le premier circuit. Cela permet aussi le pilotage d'une assistance à l'accélération utilisant les deux bobinages, ce qui est notamment utile en situation d'urgence puisqu'on peut alors bénéficier simultanément pour cette accélération de la puissance développée dans chacun des deux bobinages.

Dans un mode de réalisation, le dispositif d'assistance comprend une première source d'énergie électrique pour alimenter le premier ou respectivement le deuxième bobinage, et le dispositif d'assistance est de plus configuré pour que le deuxième ou respectivement le premier bobinage puisse être alimenté par une deuxième source d'énergie distincte de la première source d'énergie, ce qui offre une plus grande sécurité en cas de défaillance d'une des sources d'énergie ou de sa connexion électrique.

Dans un mode de réalisation, le dispositif comprend de plus une machine tournante démarreur tierce pour apporter une assistance à l'accélération au générateur de gaz d'une deuxième turbomachine de l'aéronef, ladite machine tournante tierce comprenant un bobinage dit troisième bobinage, le dispositif d'assistance comprenant de plus une source d'énergie électrique configurée pour alimenter, en fonction des besoins, le premier ou le troisième bobinages.

Ainsi, sur un appareil bi-moteur, on obtient une assistance à l'accélération pour chacune des turbomachines, tout en ne multipliant pas les sources d'énergie, puisque la source d'énergie pour la première turbomachine est également utilisée pour la deuxième turbomachine.

Dans un mode de réalisation, la machine tournante démarreur, comprise dans le dispositif d'assistance, étant aussi une génératrice actionnée par la turbomachine quand elle est active, le deuxième bobinage est quant à lui celui d'une deuxième machine tournante comprise dans le dispositif d'assistance et qui est seulement un démarreur.

La génératrice peut être utilisée pour recharger un élément de stockage d'énergie compris dans le dispositif d'assistance ou extérieur à celui-ci.

L'élément de stockage d'énergie peut être utilisable pour fournir la puissance électrique pour l'assistance à l'accélération du générateur de gaz. Cela est notamment utile, comme évoqué en introduction, au cours d'une phase de vol de l'aéronef pendant laquelle une deuxième turbomachine fournit de la puissance à la voilure tournante de l'aéronef pour son vol, et qu'il convient d'opérer un redémarrage (réactivation) d'urgence de la première turbomachine.

Le fait d'avoir deux machines tournantes distinctes, une seule étant chargée de la génération de courant, peut permettre de dimensionner au mieux les deux bobinages et les culasses des machines tournantes tout en mettant en place un stockage d'énergie pour le redémarrage d'urgence d'une turbomachine en vol et en assurant une ségrégation physique et fonctionnelle, favorable à la disponibilité de la fonction de démarrage normal ou d'urgence du turbomoteur, entre les deux machines tournantes et leurs convertisseurs d'alimentation, dans les modes de réalisation dans lesquels elles sont reliées à de tels convertisseurs.

Dans un mode de réalisation, le deuxième bobinage est celui d'une deuxième machine tournante comprise dans le dispositif d'assistance, la deuxième machine tournante étant à courant continu, et la première machine tournante, comprise aussi dans le dispositif d'assistance, à courant alternatif.

Cela permet de mettre en place un pilotage couple/vitesse de la première machine tournante fonctionnant en courant alternatif, utilisée en priorité, et de disposer d'une machine tournante de secours directement alimentée par le réseau de bord à courant continu de l'aéronef, ce qui est actuellement le dispositif de démarrage de la majorité des hélicoptères équipés de turbomoteurs de petites ou moyenne puissance et d'un démarreur électrique.

Dans un mode d'utilisation, le premier bobinage est alimenté par un organe de stockage électrique et le deuxième bobinage est alimenté par le réseau de bord de l'aéronef. On propose donc ici un aéronef, par exemple un hélicoptère bi-moteur, comprenant un dispositif d'assistance selon l'invention, le deuxième bobinage étant alimenté par le réseau de bord de l'aéronef.

Cela permet de disposer d'un stockage de puissance, pour le démarrage ou le redémarrage en urgence, tout en étant en mesure de palier à une défaillance de l'organe de stockage électrique sans néanmoins doubler celui-ci, ce qui peut être considéré comme pénalisant sur le plan de l'encombrement et de la masse.

Dans un mode de réalisation, les moyens pour alimenter le deuxième bobinage comprennent un contacteur qui est fermé s'il est constaté, par les moyens de surveillance, une difficulté ou une impossibilité à accélérer ledit générateur de gaz, par exemple pour démarrer ladite turbomachine, à l'aide du premier bobinage.

Le contacteur est un dispositif électromécanique simple présentant un risque faible de défaillance.

Il est également proposé un procédé d'assistance à une turbomachine à turbine libre d'aéronef tel que défini dans la revendication 17.

### Liste de figures

La figure 1 présente le contexte des modes de réalisation de l'invention.
La figure 2 présente un premier mode de réalisation de l'invention.
La figure 3 présente un deuxième mode de réalisation de l'invention.
La figure 4 présente un troisième mode de réalisation de l'invention.

### Description détaillée de modes de réalisation

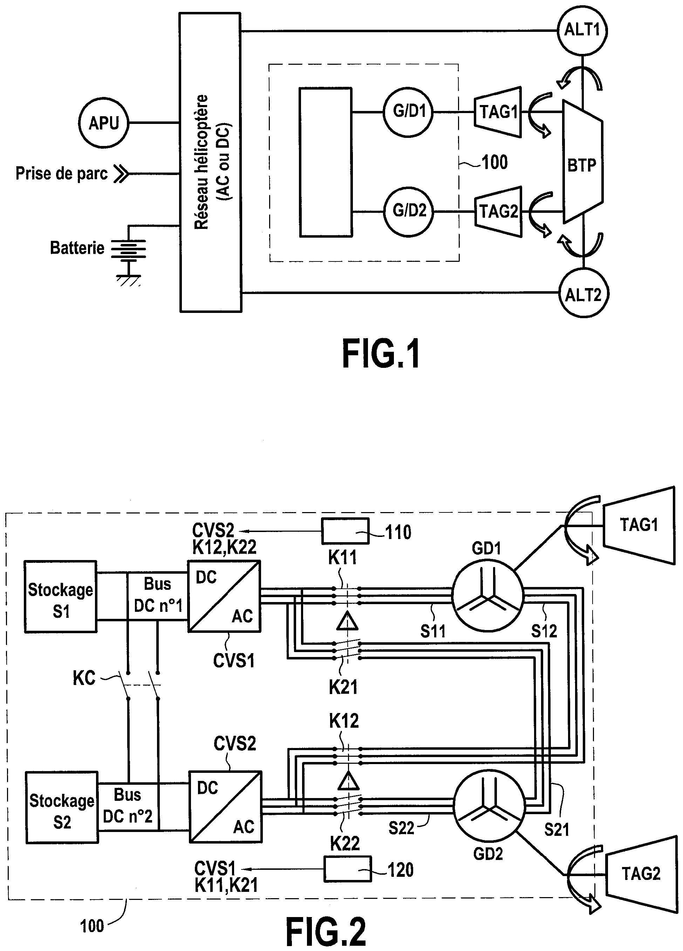

En référence à la **figure 1****,** l'architecture électrique générale d'un mode de réalisation du système proposé est la suivante. Elle est donnée dans le cadre d'un hélicoptère à deux turbomachines.

La boîte de transmission de puissance BTP est entraînée par les turbomachines TAG1 et TAG2. Il s'agit ici de turbomoteurs à turbine libre. Elles comprennent chacune une turbine de puissance (turbine libre) entrainant la boîte de transmission de puissance (BTP) par l'intermédiaire d'une roue libre, et un générateur de gaz.

La génération électrique de l'aéronef est assurée par au moins deux alternateurs ALT1 et ALT2 entraînés par la BTP. Bien que cette architecture plutôt réservée aux hélicoptères lourds ne soit pas indispensable pour la mise en oeuvre de la présente invention et n'en constitue pas une caractéristique essentielle, elle est techniquement préférable à la solution classique sur les aéronefs de plus faible tonnage consistant à entraîner les génératrices par le générateur de gaz des turbomoteurs. En effet, une économie de carburant en vol de croisière étant obtenue, comme évoqué en introduction, par la mise en veille d'un des turbomoteurs, ce qui est un mode de fonctionnement incompatible avec le prélèvement d'un quelconque niveau de puissance sur le générateur de gaz, il apparaît comme pertinent notamment en termes de sécurité de découpler fonctionnellement la génération électrique de l'aéronef du régime de fonctionnement des turbomoteurs.

ALT1 et ALT2 alimentent le réseau électrique de l'aéronef, d'autres sources d'énergies disponibles pour alimenter ce réseau pouvant être constituées par un groupe auxiliaire de puissance embarqué (APU), une ou plusieurs batteries(s) d'accumulateurs, ou encore, au sol, une prise de parc.

Chaque turbomoteur TAG1 et TAG2, est équipé d'une machine tournante (G/D1 et G/D2, respectivement) apte à fonctionner en démarreur comme en générateur, et mécaniquement reliée au générateur de gaz de la turbomachine correspondante par l'intermédiaire d'une boite d'accessoires.

Afin d'optimiser la compacité et la masse du dispositif, on préfère pour GD1 et GD2 une architecture de machine compatible avec un entraînement à grande vitesse par le générateur de gaz, donc sans bobinage rotorique, telle par exemple et de manière non exhaustive une machine synchrone « *brushless »* (moteur sans balais) à aimants permanents, une machine à réluctance variable ou une machine asynchrone à cage (sans balais).

Les deux machines G/D1 et G/D2 sont incluses dans un dispositif d'assistance 100, fonctionnant indépendamment du réseau électrique de l'aéronef.

En référence à la **figure 2****,** on a présenté un premier mode de réalisation du dispositif d'assistance 100. Les machines électriques GD1 et GD2 sont des machines électriques à double bobinage, ou machines tournantes à courant alternatif à tolérance de panne.

Ces machines sont constituées d'un circuit magnétique ou culasse unique et de deux enroulements ou bobinages statoriques polyphasés distincts, notés S11 et S12 pour GD1 et S21 et S22 pour GD2.

GD1 et GD2 sont par exemple des machines de type synchrone ou asynchrone.

Les bobinages S11 et S22 sont reliés respectivement à des convertisseurs de puissance DC/AC réversibles CVS1 et CVS2. Ceux-ci constituent chacun une interface entre le circuit à courant alternatif polyphasé du bobinage et un circuit à courant continu constitué d'un bus à courant continu reliant le convertisseur à un organe de stockage électrique. Les organes de stockage électrique sont notés respectivement S1 et S2, et les bus continus les connectant Bus n°1 et Bus n°2.

Les organes de stockage électrique sont ici à courant continu, et sont par exemple des supercondensateurs, des condensateurs hybride, des batteries d'accumulateurs ou des volants d'inertie équipés d'un convertisseur intégré courant continu / courant alternatif.

Les bobinages S12 et S21 sont quant à eux reliés aux convertisseurs de puissance opposés, c'est à dire respectivement CVS2 et CVS1. Les bobinages S12 et S22 sont ainsi connectés en dérivation, ou en parallèle, l'un vis-à-vis de l'autre à la sortie du convertisseur CVS2, alors que les bobinages S11 et S21 sont connectés en dérivation l'un vis-à-vis de l'autre à la sortie du convertisseur CVS1.

Des contacteurs K11, K21, K12 et K22 sont présents pour isoler ou connecter électriquement respectivement les bobinages S11, S21, S12 et S22, et fonctionnent ou sont actionnés de manière coordonnée pour que les convertisseurs CVS1 et CVS2 puissent être utilisés pour piloter chacun au plus une unique machine tournante à un instant donné. Ainsi, la fermeture du contacteur K11, respectivement K21 entraine l'ouverture du contacteur K21, respectivement K11, et celle du contacteur K12, respectivement K22 entraine l'ouverture du contacteur K22, respectivement K12. Sachant que dans tous les cas il n'est besoin de démarrer qu'un seul turbomoteur à la fois, ce dispositif de contacteurs et la logique de commande associée permettent avantageusement de mutualiser les convertisseurs de puissance entre les deux machines tournantes et d'en réduire le nombre nécessaire de quatre à deux, tout en conservant le niveau de redondance exigé par la disponibilité des fonctions de démarrage normal et d'urgence, ce qui procure un gain distinctif en termes de masse et d'encombrement.

Un contacteur KC permet de relier, ou au contraire d'isoler électriquement les deux bus DC, n°1 et n°2.

Les machines tournantes GD1 et GD2 sont ici à la fois des génératrices et des démarreurs. En fonctionnement génératrice, elles sont entrainées en rotation par le générateur de gaz de la turbomachine correspondante, et elles sont en mesure, par l'un ou l'autre de leurs bobinages statoriques, de transférer de l'énergie électrique vers les éléments de stockages S1 et/ou S2, ou vers l'unique élément de stockage si un seul élément de stockage est prévu.

Une fois les éléments de stockage d'énergie électrique chargés, une phase de vol monomoteur peut être menée. Dans le scénario présenté ici, la turbomachine TAG1 fournit la puissance motrice et la turbomachine TAG2 est maintenue dans un mode de veille parmi ceux présentés en introduction. Pour redémarrer la turbomachine TAG2, par exemple avant l'atterrissage, ou en cas de perte de puissance sur la turbomachine TAG1, il est proposé de tout d'abord isoler électriquement les bus n°1 et n°2 l'un de l'autre à l'aide du contacteur KC, de manière à s'assurer de la non propagation de panne d'une partie du système à une autre. Puis le contacteur K21 est fermé, K11 étant ouvert et le convertisseur CVS1 étant inhibé, prêt au fonctionnement mais n'alimentant pas de manière effective le bobinage S21.

Simultanément, le contacteur K22 est fermé, K12 étant ouvert, et le convertisseur CVS2 étant commandé en onduleur pour contrôler la machine tournante GD2 fonctionnant en mode moteur et réguler le couple fourni par celle-ci selon une loi optimisée pour le démarrage normal ou d'urgence de la turbomachine en fonction des circonstances. Le générateur de gaz de la turbomachine TAG2 est donc actionné de manière à permettre le démarrage de la turbomachine.

Si une panne ou insuffisance de puissance survient sur la chaîne de puissance S2-CVS2-K22-S22 et menace la possibilité de mener l'accélération du générateur de gaz de la turbomachine TAG2 à bien, celle-ci est repérée par des moyens de surveillance 120. Ces moyens de surveillance 120 commandent alors la mise en action du convertisseur CVS1.

Dans une première variante, le convertisseur CVS2 est déconnecté du bobinage S22 à l'aide du contacteur K22 ou mis en veuille, et le convertisseur de puissance CVS1 alimente, seul, le bobinage S21 selon une loi de pilotage de couple identique à celle mise en oeuvre par le convertisseur CSV1. Ainsi, la séquence de démarrage est poursuivie. Alors qu'initialement l'énergie était prélevée sur l'organe de stockage S2, elle l'est ensuite sur l'organe de stockage S1.

Dans une deuxième variante, et en cas de panne partielle ou progressive de la chaîne de puissance S2-CVS2-K22-S22, il est mis en oeuvre une stratégie de pilotage séquentiel des convertisseurs, en transférant le couple d'une branche à l'autre de manière continue, en tout ou partie.

Ainsi les assistances par les deux bobinages peuvent être exclusives ou au contraire simultanées.

On précise qu'une panne ou insuffisance de puissance dans la chaîne de puissance S2-CVS2-K22-S22 peut être détectée, par les moyens de surveillance 120, au niveau de chaque élément de la chaîne de puissance S2-CVS2-K22-S22 (y compris le bus à courant continu), ou au niveau du système de supervision de la turbomachine TAG1, par exemple en comparant l'accélération du générateur de gaz à un gabarit prédéterminé.

La chaîne de puissance S1-CVS1-K11-S11 et l'assistance à l'accélération du générateur de gaz de la turbomachine TAG1 sont surveillées de la même manière par des moyens de surveillance 110 qui assurent un rôle symétrique aux moyens de surveillance 120.

Dans une variante, chacun des bobinages S11, S12, S21 et S22 est dimensionné pour pouvoir, en fonctionnement moteur, fournir à lui seul les performances nécessaires pour un démarrage d'urgence, et a fortiori pour un démarrage normal de la turbomachine correspondante. Ainsi, en cas de panne ou d'insuffisance sur une des chaînes de puissance, démarrage normal et démarrage d'urgence peuvent être menés à bien avec une chaîne de puissance de remplacement.

Dans une autre variante, seuls les bobinages S11 et S21 sont dimensionnés pour pouvoir fournir, individuellement, les performances nécessaires pour un démarrage d'urgence. Néanmoins, les quatre bobinages S11, S21, S12 et S22 sont dimensionnés pour pouvoir fournir les performances nécessaires à un démarrage normal. Ainsi, en cas de panne ou d'insuffisance sur une des chaînes de puissance impliquant S11 ou S21, le démarrage normal peut être mené à bien avec une chaîne de puissance de remplacement, et le démarrage d'urgence s'opère avec des performances similaires à celles d'un démarrage normal, à l'aide d'un des bobinages S12 ou S22.

Enfin, dans une autre variante, les bobinages S11 et S12 (respectivement S22 et S21) sont dimensionnés pour délivrer conjointement, en étant alimentés simultanément, les performances de couple et de puissance pour le démarrage d'urgence de la turbomachine TAG1 (respectivement TAG2). Les deux convertisseurs CVS1 et CVS2 sont, pour un tel démarrage d'urgence, activés simultanément, l'un étant maître et l'autre esclave, de manière à alimenter de manière coordonnée les deux bobinages. On propose de plus que les bobinages S11 et S12 (respectivement S22 et S21) soient dimensionnés dans cette variante, pour permettre un démarrage normal utilisant un seul bobinage, ce qui permet d'assurer qu'en cas de panne ou d'insuffisance dans une des chaînes de puissance impliquant, un démarrage normal de la turbomachine puisse être mené à bien en tout état de cause.

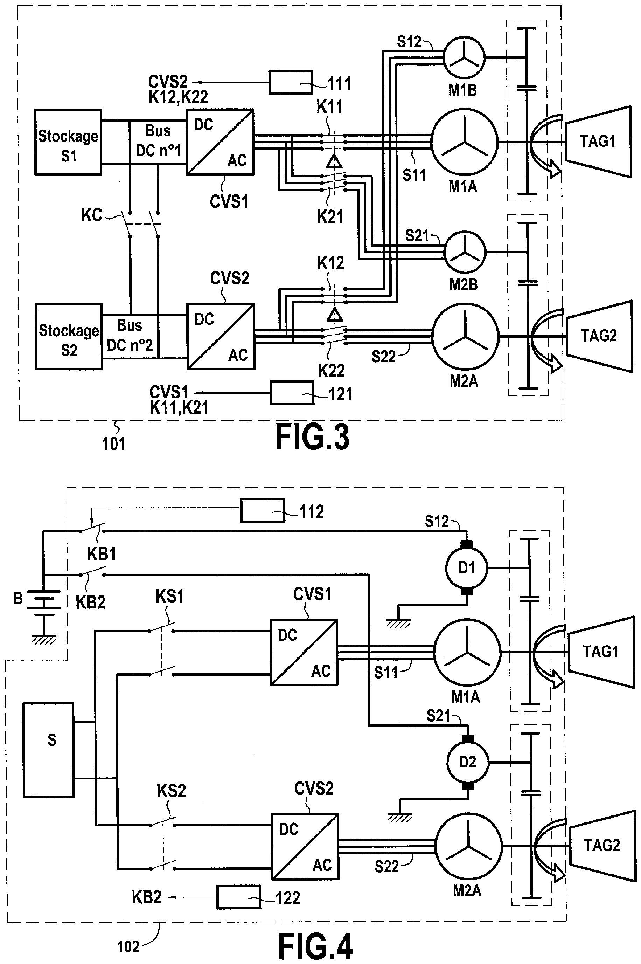

En référence à la **figure 3****,** un autre mode de réalisation d'un dispositif d'assistance, ici référence 101, est présenté. Les machines à double bobinage sont remplacées par des ensembles de deux machines tournantes à simple bobinage.

Ainsi, en remplacement de GD1, une machine tournante M1A à courant alternatif à un seul bobinage statorique est présente, avec, sur une autre prise de la boîte d'accessoires de la turbomachine TAG1, une autre machine tournante M1B à courant alternatif également à un seul bobinage statorique. Le bobinage S11 est dans ce mode de réalisation celui de la machine M1A et le bobinage S12 celui de la machine M1B. Il s'agit de bobinages polyphasés.

La machine M1A est à la fois une génératrice et un démarreur, alors que la machine M1B n'est qu'un démarreur. M1B peut éventuellement être mécaniquement reliée au générateur de gaz de la turbomachine par l'intermédiaire d'une roue libre, ce qui permet de ne dimensionner le démarreur que pour la vitesse maximale d'entraînement en mode démarreur soit autour de 50 à 60%NG, au lieu de la vitesse maximale du générateur de gaz soit 100%NG. Ainsi, pendant les phases de vol au cours desquelles la turbomachine est en fonctionnement, l'élément de stockage d'énergie électrique S1 est rechargé via la génératrice M1A et le convertisseur CVS1, la machine tournante M1B étant laissée au repos.

On précise de plus que l'une des deux machines M1A ou M1B est dimensionnée pour pouvoir fournir les performances requises en cas de démarrage d'urgence, mais que l'autre machine peut n'être dimensionnée que pour fournir les performances requises pour un démarrage normal.

Des éléments similaires sont mis en place au niveau de la boîte d'accessoires de la turbomachine TAG2, les machines électriques étant notées M2A et M2B.

Des moyens de surveillance 111 et 121 surveillent l'assistance à l'accélération des générateurs de gaz des turbomachines, comme en figure 2, pour commander la mise en route des convertisseurs de puissance CVS1 et CVS2.

En référence à la **figure 4****,** un autre mode de réalisation d'un dispositif d'assistance, ici référence 102, est présenté. Les machines M1B et M2B sont remplacées par des machines à courant continu à balai et collecteur, D1 et D2. Leurs bobinages d'induit (au rotor) respectifs, S12 et S21, sont reliés au réseau de bord à courant continu de l'hélicoptère, qui est un réseau 28VDC comprenant notamment au moins une batterie d'accumulateurs B. Des contacteurs KB1 et KB2 (en général non coordonnées l'un à l'autre) permettent d'isoler ces machines du réseau de bord ou au contraire de les y relier.

Un organe de stockage d'énergie électrique S unique peut de plus remplacer, dans la variante représentée, les organes de stockage S1 et S2 des précédents modes de réalisation. Des contacteurs KS1 et KS2 permettent de relier cet organe S soit au convertisseur CVS1 soit au convertisseur CVS2. Il est néanmoins possible d'utiliser deux organes de stockage comme en figures 2 et 3.

Des moyens de surveillance 112 et 122 surveillent l'assistance à l'accélération des générateurs de gaz des turbomachines, comme en figures 2 et 3, pour commander cette fois-ci le basculement des commutateurs KB1 et KB2.

En cas de panne ou d'insuffisance empêchant de procéder au démarrage d'une turbomachine, par exemple la turbomachine TAG1, à l'aide de la machine tournante à courant alternatif correspondante, c'est-à-dire pour TAG1 la machine M1A, le contacteur KB1 est fermé et le moteur à courant continu D1 prend le relai, permettant de procéder à un démarrage normal de la turbomachine TAG1 bien que le couple d'assistance ne puisse pas être piloté.

Les machines à courant continu D1 et D2 peuvent être des génératrices, en plus de leur fonction de démarreur. Si ce n'est pas le cas, elles peuvent être reliées à la boîte d'accessoires de la turbomachine correspondante par une roue libre.

L'invention n'est pas limitée aux modes de réalisation présentés, mais s'étend à toutes les variantes dans le cadre de la portée des revendications.

## Revendications

1. Dispositif d'assistance (100 ; 101 ; 102) pour une turbomachine (TAG1) à turbine libre d'aéronef, le dispositif comprenant :
- une machine tournante démarreur (GD1, M1A) comportant un premier bobinage (S11), et
- des premiers moyens d'alimentation (K11, CVS1) en énergie électrique du premier bobinage (S11) pour entraîner le générateur de gaz de la turbomachine (TAG1),
**caractérisé en ce que** le dispositif comprend de plus :
- un deuxième bobinage (S12) distinct du premier bobinage (S11) et compris dans ladite machine tournante (GD1), ladite machine tournante (GD1) étant une machine tournante à double bobinage, ou dans une autre machine tournante (M2A), ladite machine tournante (M1A) et l'autre machine (M2A) tournante étant des machines tournantes à simple bobinage,
- des moyens de surveillance (110 ; 111 ; 112) des premiers moyens d'alimentation (K11, CVS1) et du premier bobinage (S11), et
- des deuxièmes moyens d'alimentation (K12, CVS2, KB1) en énergie électrique du deuxième bobinage (S12) pour entraîner le générateur de gaz de la turbomachine (TAG1),
- lesdits moyens de surveillance étant configurés pour repérer une insuffisance de puissance dans les premiers moyens d'alimentation (K11, CVS1) ou dans le premier bobinage (S11) et commander l'alimentation en énergie électrique du deuxième bobinage (S12) par les deuxièmes moyens d'alimentation (K12, CVS2, KB1) si une telle insuffisance de puissance est repérée.

2. Dispositif d'assistance selon la revendication 1, comprenant la machine tournante démarreur (GD1, M1A) et de plus une machine tournante démarreur tierce (GD2 ; M2A) pour apporter une assistance à l'accélération du générateur de gaz d'une deuxième turbomachine (TAG2) de l'aéronef, le deuxième bobinage (S12) étant connecté électriquement, en dérivation de ladite machine tournante tierce (GD2 ; M2A), à une même voie d'alimentation électrique (CVS2).

3. Dispositif d'assistance selon la revendication 2, comprenant un convertisseur de puissance (CVS2) et configuré pour que ledit convertisseur de puissance (CVS2) transmette de l'énergie électrique au deuxième bobinage (S12) de la machine tournante démarreur (GD1, M1A) ou, de manière exclusive, à la machine tournante démarreur tierce (GD2, M2A).

4. Dispositif d'assistance selon la revendication 3, comprenant un couple de contacteurs (K12, K22) ne pouvant pas être en position fermée de manière simultanée, de manière à obtenir la transmission d'énergie électrique exclusive au deuxième bobinage (S12) ou à la machine tournante démarreur tierce (GD2, M2A).

5. Dispositif d'assistance selon l'une des revendications 1 à 4, dans lequel les moyens de surveillance (110 ; 111 ; 112) sont configurés pour surveiller un ou plusieurs éléments (S1, CVS1, K11, S11) de la chaîne de puissance alimentant la machine tournante démarreur (GD1 ; M1A) en électricité

6. Dispositif d'assistance selon l'une des revendications 1 à 5, dans lequel les moyens de surveillance (110 ; 111 ; 112) sont configurés pour surveiller le système de supervision de la turbomachine (TAG1).

7. Dispositif d'assistance selon l'une des revendications 1 à 6, comprenant ladite machine tournante démarreur (GD1), celle-ci étant une machine tournante à courant alternatif à tolérance de panne dite machine à double bobinage ou double étoile, le deuxième bobinage (S12) étant son deuxième bobinage.

8. Dispositif d'assistance selon la revendication 7, dans lequel le deuxième bobinage (S12) est dimensionné pour permettre l'assistance à l'accélération avec des performances similaires à celles fournies par le premier bobinage (S11).

9. Dispositif d'assistance selon la revendication 7, dans lequel le deuxième bobinage (S12) est dimensionné pour permettre l'assistance à l'accélération avec des performances supérieures à celles de la deuxième assistance.

10. Dispositif d'assistance selon l'une des revendications 1 à 9, comprenant deux convertisseurs de puissance (CVS1, CVS2) pour transmettre chacun de l'énergie électrique de manière contrôlée respectivement auxdits premier et deuxième bobinages (S11, S12).

11. Dispositif d'assistance selon l'une des revendications 1 à 10, comprenant une première source d'énergie électrique (S1, S) pour alimenter le premier ou respectivement le deuxième bobinage (S11, S12), le dispositif d'assistance étant de plus configuré pour que le deuxième ou respectivement le premier bobinage (S12, S11) puisse être alimenté par une deuxième source d'énergie (S2 ; B) distincte de la première source d'énergie.

12. Dispositif d'assistance selon l'une des revendications 1 à 11, comprenant de plus une machine tournante démarreur tierce (M2A) pour apporter une assistance à l'accélération au générateur de gaz d'une deuxième turbomachine (TAG2) de l'aéronef, ladite machine tournante tierce (M2A) comprenant un bobinage (S22) dit troisième bobinage, le dispositif d'assistance comprenant de plus une source d'énergie électrique (S1, S2, KC ; S, KS1, KS2) configurée pour alimenter, en fonction des besoins, le premier ou le troisième bobinage (S11, S22).

13. Dispositif d'assistance selon l'une des revendications 1 à 12, dans lequel la machine tournante démarreur (M1A) est comprise dans le dispositif d'assistance et est aussi une génératrice configurée pour être actionnée par la turbomachine (TAG1), le deuxième bobinage (S12) étant quant à lui celui d'une deuxième machine tournante (M1B ; D1) comprise dans le dispositif d'assistance et qui est seulement un démarreur.

14. Dispositif d'assistance selon l'une des revendications 1 à 13, dans lequel le deuxième bobinage (S12) est celui d'une deuxième machine tournante (D1) comprise dans le dispositif d'assistance, la deuxième machine tournante étant à courant continu, et la première machine tournante (M1A), comprise dans le dispositif d'assistance, étant à courant alternatif.

15. Dispositif d'assistance selon l'une des revendications 1 à 14, dans lequel les moyens pour alimenter le deuxième bobinage comprennent un contacteur (KB1) configuré pour être fermé s'il est constaté une impossibilité à accélérer ledit générateur de gaz à l'aide du premier bobinage.

16. Aéronef comprenant un dispositif d'assistance selon l'une des revendications 1 à 15, et dans lequel le premier bobinage (S11) est alimenté par un organe de stockage électrique (S) et le deuxième bobinage est alimenté par le réseau de bord de l'aéronef.

17. Procédé d'assistance à une turbomachine (TAG1) à turbine libre d'aéronef, comprenant une étape d'alimentation en énergie électrique par des premiers moyens d'alimentation (K11, CVS1) en énergie électrique d'un premier bobinage (S11) d'une machine tournante démarreur (GD1, M1A), pour entraîner le générateur de gaz de la turbomachine (TAG1), **caractérisé en ce que** le procédé comprend de plus
- une étape de surveillance des premiers moyens d'alimentation (K11, CVS1) et du premier bobinage (SU), et
- une étape d'alimentation en énergie électrique par des deuxièmes moyens d'alimentation (K12, CVS2, KB1) en énergie électrique d'un deuxième bobinage (S12) pour entraîner ledit générateur de gaz, s'il est constaté au cours de l'étape de surveillance une insuffisance de puissance dans les premiers moyens d'alimentation (K11, CVS1) ou dans le premier bobinage (S11), le deuxième bobinage (S12) étant distinct du premier bobinage (S11) et compris dans ladite machine tournante (GD1), ladite machine tournante (GD1) étant une machine tournante à double bobinage, ou dans une autre machine tournante (M2A), ladite machine tournante (M1A) et l'autre machine (M2A) tournante étant des machines tournantes à simple bobinage.

## Patentansprüche

1. Hilfsvorrichtung (100; 101; 102) für eine Turbomaschine (TAG1) mit Freilaufturbine eines Luftfahrzeugs, wobei die Vorrichtung umfasst:
- eine umlaufende Startermaschine (GD1, M1A), die eine erste Wicklung (S11) umfasst, und
- erste Mittel zur Versorgung (K11, CVS1) der ersten Wicklung (S11) mit elektrischer Energie, um den Gasgenerator der Turbomaschine (TAG1) anzutreiben,
**dadurch gekennzeichnet, dass** die Vorrichtung weiterhin umfasst:
- eine zweite Wicklung (S12), welche von der ersten Wicklung (S11) getrennt und in der umlaufenden Maschine (GD1) enthalten ist, wobei die umlaufende Maschine (GD1) eine umlaufende Maschine mit zweifacher Wicklung ist, oder in einer anderen umlaufenden Maschine (M2A), wobei die umlaufende Maschine (M1A) und die andere umlaufende Maschine (M2A) umlaufende Maschinen mit einfacher Wicklung sind,
- Mittel zur Überwachung (110; 111; 112) der ersten Versorgungsmittel (K11, CVS1) und der ersten Wicklung (S11), und
- zweite Mittel zur Versorgung (K12, CVS2, KB1) der zweiten Wicklung (S12) mit elektrischer Energie, um den Gasgenerator der Turbomaschine (TAG1) anzutreiben,
- wobei die Überwachungsmittel dazu ausgestaltet sind, einen Leistungsmangel in den ersten Versorgungsmitteln (K11, CVS1) oder in der ersten Wicklung (S11) zu erkennen und die Versorgung der zweiten Wicklung (S12) mit elektrischer Energie durch die zweiten Versorgungsmittel (K12, CVS2, KB1) zu steuern, wenn ein solcher Leistungsmangel erkannt wird.

2. Hilfsvorrichtung nach Anspruch 1, umfassend die umlaufende Startermaschine (GD1, M1A) und zudem eine umlaufende Drittstartermaschine (GD2; M2A), um eine Beschleunigungsunterstützung des Gasgenerators einer zweiten Turbomaschine (TAG2) des Luftfahrzeugs zu liefern, wobei die zweite Wicklung (S12) von der umlaufenden Drittmaschine (GD2; M2A) abzweigend mit einem gleichen Stromversorgungspfad (CVS2) elektrisch verbunden ist.

3. Hilfsvorrichtung nach Anspruch 2, die einen Leistungswandler (CVS2) umfasst und die ausgestaltet ist, damit der Leistungswandler (CVS2) elektrische Energie auf die zweite Wicklung (S12) der umlaufenden Startermaschine (GD1, M1A) oder ausschließlich auf die umlaufende Drittstartermaschine (GD2, M2A) überträgt.

4. Hilfsvorrichtung nach Anspruch 3, umfassend ein Paar von Schützen (K12, K22), die nicht gleichzeitig in geschlossener Stellung sein können, um die ausschließliche Übertragung elektrischer Energie auf die zweite Wicklung (S12) oder auf die umlaufende Drittstartermaschine (GD2, M2A) zu erreichen.

5. Hilfsvorrichtung nach einem der Ansprüche 1 bis 4, bei der die Überwachungsmittel (110, 111; 112) dazu ausgestaltet sind, ein oder mehrere Elemente (S1, CVS1, K11, S11) der Leistungskette, welche die umlaufende Startermaschine (GD1; M1A) mit Strom versorgt, zu überwachen.

6. Hilfsvorrichtung nach einem der Ansprüche 1 bis 5, bei der die Überwachungsmittel (110; 111; 112) dazu ausgestaltet sind, das Überwachungssystem der Turbomaschine (TAG1) zu überwachen.

7. Hilfsvorrichtung nach einem der Ansprüche 1 bis 6, umfassend die umlaufende Startermaschine (GD1), wobei diese eine umlaufende Wechselstrommaschine mit Fehlertoleranz, sogenannte Doppelwicklungs- oder Doppelstern-Maschine ist, wobei die zweite Wicklung (S12) ihre zweite Wicklung ist.

8. Hilfsvorrichtung nach Anspruch 7, bei der die zweite Wicklung (S12) dimensioniert ist, um die Beschleunigungsunterstützung mit Leistungen ähnlich denjenigen, welche durch die erste Wicklung (S11) bereitgestellt werden, zu ermöglichen.

9. Hilfsvorrichtung nach Anspruch 7, bei der die zweite Wicklung (S12) dimensioniert ist, um die Beschleunigungsunterstützung mit Leistungen, die größer als die der zweiten Unterstützung sind, zu ermöglichen.

10. Hilfsvorrichtung nach einem der Ansprüche 1 bis 9, umfassend zwei Leistungswandler (CVS1, CVS2), um jeweils elektrische Energie auf die erste bzw. die zweite Wicklung (S11, S12) kontrolliert zu übertragen.

11. Hilfsvorrichtung nach einem der Ansprüche 1 bis 10, umfassend eine erste elektrische Energiequelle (S1, S), um die erste bzw. die zweite Wicklung (S11, S12) zu versorgen, wobei die Hilfsvorrichtung zudem dazu ausgelegt ist, dass die zweite bzw. die erste Wicklung (S12, S11) durch eine von der ersten Energiequelle getrennte zweite Energiequelle (S2; B) versorgt werden kann.

12. Hilfsvorrichtung nach einem der Ansprüche 1 bis 11, zudem umfassend eine umlaufende Drittstartermaschine (M2A), um dem Gasgenerator einer zweiten Turbomaschine (TGA2) des Luftfahrzeugs eine Beschleunigungsunterstützung zu liefern, wobei die umlaufende Drittmaschine (M2A) eine Wicklung (S22), sogenannte dritte Wicklung, umfasst, wobei die Hilfsvorrichtung zudem eine elektrische Energiequelle (S1, S2, KC; S, KS1, KS2) umfasst, die dazu ausgestaltet ist, die erste oder die dritte Wicklung (S11, S22) bedarfsabhängig zu versorgen.

13. Hilfsvorrichtung nach einem der Ansprüche 1 bis 12, bei der die umlaufende Startermaschine (M1A) in der Hilfsvorrichtung enthalten und auch ein Generator ist, der dazu ausgestaltet ist, durch die Turbomaschine (TAG1) betätigt zu werden, wobei die zweite Wicklung (S12) ihrerseits diejenige einer zweiten umlaufenden Maschine (M1B; D1) ist, welche in der Hilfsvorrichtung enthalten ist und die nur ein Starter ist.

14. Hilfsvorrichtung nach einem der Ansprüche 1 bis 13, bei der die zweite Wicklung (S12) diejenige einer zweiten umlaufenden Maschine (D1) ist, welche in der Hilfsvorrichtung enthalten ist, wobei die zweite umlaufende Maschine eine Gleichstrommaschine ist, und wobei die erste umlaufende Maschine (M1A), welche in der Hilfsvorrichtung enthalten ist, eine Wechselstrommaschine ist.

15. Hilfsvorrichtung nach einem der Ansprüche 1 bis 14, bei der die Mittel zum Versorgen der zweiten Wicklung ein Schütz (KB1) umfassen, das dazu ausgestaltet ist, geschlossen zu werden, wenn eine Unmöglichkeit des Beschleunigens des Gasgenerators mit Hilfe der ersten Wicklung festgestellt wird.

16. Luftfahrzeug, umfassend eine Hilfsvorrichtung nach einem der Ansprüche 1 bis 15, und wobei die erste Wicklung (S11) über ein Stromspeicherorgan (S) versorgt wird und die zweite Wicklung über das Bordnetz des Luftfahrzeugs versorgt wird.

17. Verfahren zur Unterstüztung einer Turbomaschine (TAG1) mit Freilaufturbine eines Luftfahrzeugs, umfassend einen Schritt zur Versorgung einer ersten Wicklung (S11) einer umlaufenden Startermaschine (GD1, M1A) mit elektrischer Energie über erste Mittel zur Versorgung (K11, CVS1) mit elektrischer Energie, um den Gasgenerator der Turbomaschine (TAG1) anzutreiben, **dadurch gekennzeichnet, dass** das Verfahren zudem umfasst
- einen Schritt zur Überwachung der ersten Versorgungsmittel (K11, CVS1) und der ersten Wicklung (S11), und
- einen Schritt zur Versorgung einer zweiten Wicklung (S12) mit elektrischer Energie über zweite Mittel zur Versorgung (K12, CVS2, KB1) mit elektrischer Energie, um den Gasgenerator anzutreiben, wenn im Laufe des Überwachungsschrittes ein Leistungsmangel in den ersten Versorgungsmitteln (K11, CVS1) oder in der ersten Wicklung (S11) festgestellt wird, wobei die zweite Wicklung (S12) von der ersten Wicklung (S11) getrennt und in der umlaufenden Maschine (GD1) enthalten ist, wobei die umlaufende Maschine (GD1) eine umlaufende Maschine mit zweifacher Wicklung ist, oder in einer anderen umlaufenden Maschine (M2A), wobei die umlaufende Maschine (M1A) und die andere umlaufende Maschine (M2A) umlaufende Maschinen mit einfacher Wicklung sind.

## Claims

1. An assistance device (100; 101; 102) for an aircraft free-turbine turbine engine (TAG1), the device comprising:
- a starter rotary machine (GD1, M1A) comprising a first winding (S11), and
- first power supply means (K11, CVS1) for electrically powering the first winding (S11) in order to drive the gas generator of the engine (TAG1),
the device being **characterized in that** it further comprises :
- a second winding (S12) distinct from the first winding (S11) and included in said rotary machine (GD1), said rotary machine (GD1) being double-winding rotary machine, or being included in another rotary machine, said rotary machine and the other rotary machine being single-winding rotary machines,
- monitor means (110; 111; 112) for monitoring the first power supply means and the first winding (S11), and
- second power supply means (K12, CVS2, KB1) for electrically powering the second winding (S12) in order to drive the gas generator of the engine (TAG1),
- said monitor means being configured to detect insufficient power in the first power supply means (K11, CVS1) or in the first winding (S11) and to control the second power supply means to supply electrical power to the second winding (S12) by the second power supply means (K12, CVS2, KB1) if such an insufficiency is detected.

2. An assistance device according to claim 1, comprising the starter rotary machine (GD1, M1A) and also another starter rotary machine (GD2; M2A) for providing assistance in accelerating the gas generator of a second turbine engine (TAG2) of the aircraft, the second winding (S12) being electrically connected in parallel with said other rotary machine (GD2; M2A) to a common electrical power supply path (CVS2).

3. An assistance device according to claim 2, including a power converter (CVS2) and configured so that said power converter (CVS2) transmits electrical energy to the second winding (S12) of the starter rotary machine (GD1, M1A), or exclusively to the other starter rotary machine (GD2, M2A).

4. An assistance device according to claim 3, having a pair of contactors (K12, K22) that cannot both be in the closed position simultaneously, so as to ensure electrical energy is transmitted exclusively to the second winding (S12) or to the other starter rotary machine (GD2, M2A).

5. An assistance device according to any one of claims 1 to 4, wherein the monitor means (110; 111; 112) monitor one or more elements (S1, CVS1, K11, S11) of the power train electrically powering the starter rotary machine (GD1; M1A).

6. An assistance device according to any one of claims 1 to 5, wherein the monitor means (110; 111; 112) monitor the supervisor system of the turbine engine (TAG1).

7. An assistance device according to any one of claims 1 to 6, including said starter rotary machine (GD1), which is a fault-tolerant AC rotary machine being a double winding or double star machine, the second winding (S12) being its second winding.

8. An assistance device according to claim 7, wherein the second winding (S12) is of dimensions enabling acceleration assistance to be provided with performance similar to that provided by the first winding (S11).

9. An assistance device according to claim 7, wherein the second winding (S12) is of dimensions enabling acceleration assistance to be provided with performance greater than that of the second assistance.

10. An assistance device according to any one of claims 1 to 9, having two power converters (CVS1, CVS2), each serving to transmit electrical power in controlled manner to said first and second windings (S11, S12) respectively.

11. An assistance device according to any one of claims 1 to 10, having a first electrical energy source (S1, S) for powering a first one of the first winding and the second winding (S11, S12), the assistance device also being configured so that the other one of the second winding and the first winding (S12, S11) can be powered by a second energy source (S2; B) that is distinct from the first energy source.

12. An assistance device according to any one of claims 1 to 11, further comprising another starter rotary machine (M2A) for delivering acceleration assistance to the gas generator of a second turbine engine (TAG2) of the aircraft, said other rotary machine (M2A) having a winding (S22) referred to as a "other" winding, the assistance device further including an electrical energy source (S1, S2, KC; S, KS1, KS2) configured as a function of need to power the first or the other winding (S11, S22) .

13. An assistance device according to any one of claims 1 to 12, wherein the starter rotary machine (M1A) is included in the assistance device and is also a generator configured to be actuated by the turbine engine (TAG1), the second winding (S12) being the winding of a second rotary machine (M1B; D1) included in the assistance device and constituting a starter only.

14. An assistance device according to any one of claims 1 to 13, wherein the second winding (S12) is the winding of a second rotary machine (D1) included in the assistance device, the second rotary machine being a DC machine, and the first rotary machine (M1A), included in the assistance device, being an AC machine.

15. An assistance device according to any one of claims 1 to 14, wherein the means for powering the second winding comprise a contactor (KB1) that is closed if it is observed that it is not possible to accelerate said gas generator using the first winding.

16. An aircraft including an assistance device according to any one of claims 1 to 15, wherein the first winding (S11) is powered by an electricity storage member (S) and the second winding is powered by the on-board network of the aircraft.

17. A method of assisting an aircraft free-turbine turbine engine (TAG1), the method comprising a step of electrically powering a first winding (S11) of a starter rotary machine (GP1, M1A) by first electrical power supply means (K11, CVS1) in order to drive the gas generator of the engine (TAG1), the method being **characterized in that** it further comprises
- a step of monitoring the first power supply means (K11, CVS1) and the first winding (S11), and
- a step of electrically powering a second winding (S12) of the rotary machine by second electrical power supply means (K12, CVS2, KB1) in order to drive said gas generator if it is observed during the monitoring step that there is insufficient power in the first power supply means (K11, CVS1) or in the first winding (S11), the second winding (S12) being distinct from the first winding (S11) and included in said rotary machine (GD1), said rotary machine (GD1) being double-winding rotary machine, or being included in another rotary machine, said rotary machine and the other rotary machine being single-winding rotary machines.
